(19) Europäisches Patentamt
European Patent Office
Office européen des brevets

(11) **EP 4 120 478 A1**

(12) **EUROPEAN PATENT APPLICATION**
published in accordance with Art. 153(4) EPC

(43) Date of publication:
**18.01.2023 Bulletin 2023/03**

(21) Application number: **21767547.9**

(22) Date of filing: **18.01.2021**

(51) International Patent Classification (IPC):
*H01Q 15/08* (2006.01)    *H01Q 21/06* (2006.01)
*G01S 7/03* (2006.01)

(52) Cooperative Patent Classification (CPC):
**G01S 7/03; H01Q 15/08; H01Q 21/06**

(86) International application number:
**PCT/JP2021/001396**

(87) International publication number:
**WO 2021/181872 (16.09.2021 Gazette 2021/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.03.2020 JP 2020040130**

(71) Applicant: **OMRON Corporation
Kyoto-shi, Kyoto 600-8530 (JP)**

(72) Inventor: **OZAWA, Hisashi
Kyoto-shi, Kyoto 600-8530 (JP)**

(74) Representative: **HGF
HGF Limited
1 City Walk
Leeds LS11 9DX (GB)**

(54) **ANTENNA DEVICE AND RADAR DEVICE**

(57) An antenna apparatus (10B) is provided with: at least one antenna element (1a to lc); and a dielectric lens (2B) including a lens body (24) made of a first dielectric material having a first dielectric constant, the lens body (24) having first and second surfaces (22, 25) opposing each other. The lens body (24) is formed so as to refract an incident wave on the antenna element (1a to 1c) or an incident wave from the antenna element (1a to 1c), at refracting angles that gradually increase as a distance from an axis (A) passing through centers of the first and second surfaces (22, 25) increases.

FIG. 3

## Description

### TECHNICAL FIELD

The present disclosure relates to an antenna apparatus and a radar apparatus.

### BACKGROUND ART

Conventionally, an antenna apparatus for a radar apparatus emits and receives a radar wave to and from a reflective object directly, or via a planar dielectric plate (radome) for protection.

A desirable antenna apparatus for a radar apparatus has a higher gain over a wide angular range. In general, the gain of the antenna apparatus decreases as the angle from the front increases, and the emitted power and the received power decrease. Therefore, when the antenna apparatus is used in the radar apparatus, there is a problem that received power of a reflected wave from a reflective object in an azimuth direction away from the front of the antenna apparatus is smaller than received power of a reflected wave from a reflective object in the front of the antenna apparatus, thus resulting in deterioration in detection performance of the radar apparatus.

To handle this, Patent Document 1 discloses a system for determining the direction of a target, the system being provided with a plurality of transceivers having main beam directions distinct from each other.

### CITATION LIST

### PATENT DOCUMENTS

PATENT DOCUMENT 1:
[Patent Document 1] European Patent Application Publication No. EP 3418769 A1

### SUMMARY OF INVENTION

### TECHNICAL PROBLEM

The system of Patent Document 1 is costly for requiring the plurality of transceivers. In addition, the detection performance of the system of Patent Literature 1 may deteriorate due to radio wave interference among the transceivers.

An object of the present disclosure is to provide an antenna apparatus and a radar apparatus having a higher gain over a wider angular range than the prior art, with a simple configuration.

### SOLUTION TO PROBLEM

According to an aspect of the present disclosure, an antenna apparatus is provided with: at least one antenna element; and a dielectric lens including a lens body made of a first dielectric material having a first dielectric constant, the lens body having first and second surfaces opposing each other. The lens body is formed so as to refract an incident wave on the antenna element or an incident wave from the antenna element, at refracting angles that gradually increase as a distance from an axis passing through centers of the first and second surfaces increases.

With such a configuration, it is possible to provide a higher gain over a wider angular range than the prior art, with a simple configuration.

According to an aspect of the present disclosure, the lens body has a plurality of holes in the first or second surface, with gradually increasing volumes of the first dielectric material being removed as approaching the axis, so that a refractive index of the dielectric lens decreases as approaching the axis.

With such a configuration, it is possible to form the lens body so as to refract the incident wave on the antenna element or the incident wave from the antenna element, at refracting angles that gradually increase as the distance from the axis increases.

According to an aspect of the present disclosure, the plurality of holes have gradually decreasing intervals as approaching the axis.

With such a configuration, it is possible to decrease the refractive index of the dielectric lens as approaching the axis.

According to an aspect of the present disclosure, the plurality of holes have gradually increasing diameters as approaching the axis.

With such a configuration, it is possible to decrease the refractive index of the dielectric lens as approaching the axis.

According to an aspect of the present disclosure, the plurality of holes have gradually increasing depths as approaching the axis.

With such a configuration, it is possible to decrease the refractive index of the dielectric lens as approaching the axis.

According to an aspect of the present disclosure, the first and second surfaces are formed in parallel to each other.

With such a configuration, it is possible to provide a planar dielectric lens.

According to an aspect of the present disclosure, the dielectric lens further includes a filler made of a second dielectric material having a second dielectric constant smaller than the first dielectric constant, the filler being filled in the plurality of holes.

With such a configuration, it is possible to provide the dielectric lens in which dust and dirt are less likely to be adsorbed and accumulated, and which is less likely to be damaged.

According to an aspect of the present disclosure, the first surface is a flat surface, and the second surface is a concave surface.

With such a configuration, it is possible to provide a higher gain over a wider angular range than the prior art, with a simple configuration.

According to an aspect of the present disclosure, the dielectric lens further includes a filler made of a second dielectric material having a second dielectric constant smaller than the first dielectric constant, the filler being filled in the second surface. A surface of the filler is formed parallel to the first surface.

With such a configuration, it is possible to provide the dielectric lens in which dust and dirt are less likely to be adsorbed and accumulated, and which is less likely to be damaged.

According to an aspect of the present disclosure, the second surface includes a plurality of regions whose distances to the first surface gradually decrease as approaching the axis.

With such a configuration, it is possible to provide the dielectric lens having two planar surfaces.

According to an aspect of the present disclosure, the plurality of regions of the second surface are formed parallel to the first surface.

With such a configuration, it is possible to provide the dielectric lens having two planar surfaces.

According to an aspect of the present disclosure, the dielectric lens further includes a filler made of a second dielectric material having a second dielectric constant smaller than the first dielectric constant, the filler being filled in a space above regions other than regions having a largest distance from the first surface, among the plurality of regions of the second surface.

With such a configuration, it is possible to provide the dielectric lens in which dust and dirt are less likely to be adsorbed and accumulated, and which is less likely to be damaged.

According to an aspect of the present disclosure, a radar apparatus is provided with: at least one antenna apparatus; a transmitting and receiving circuit that transmits and receives radar waves via the antenna apparatus; and a signal processing circuit that detects a reflective object based on the radar waves transmitted and received by the transmitting and receiving circuit.

With such a configuration, it is possible to provide a higher gain over a wider angular range than the prior art, with a simple configuration.

ADVANTAGEOUS EFFECTS OF INVENTION

The antenna apparatus and the radar apparatus according to the aspect of the present disclosure can provide a higher gain over a wider angular range than the prior art, with a simple configuration.

BRIEF DESCRIPTION OF DRAWINGS

Fig. 1 is a diagram illustrating a configuration of an antenna apparatus 10 according to a first embodiment.

Fig. 2 is a diagram illustrating a configuration of an antenna apparatus 10A according to a modified embodiment of the first embodiment.

Fig. 3 is a diagram illustrating a configuration of an antenna apparatus 10B according to a second embodiment.

Fig. 4A is a top view illustrating a configuration of a dielectric lens 2B of Fig. 3.

Fig. 4B is a cross-sectional view taken along line Bb-Bb' of Fig. 4A.

Fig. 5A is a top view illustrating a configuration of a dielectric lens 2C of an antenna apparatus according to a first modified embodiment of the second embodiment.

Fig. 5B is a cross-sectional view taken along line Bc-Bc' of Fig. 5A.

Fig. 6A is a top view illustrating a configuration of a dielectric lens 2D of an antenna apparatus according to a second modified embodiment of the second embodiment.

Fig. 6B is a cross-sectional view taken along line Bd-Bd' of Fig. 6A.

Fig. 7A is a top view illustrating a configuration of a dielectric lens 2E of an antenna apparatus according to a third modified embodiment of the second embodiment.

Fig. 7B is a cross-sectional view taken along line Be-Be' of Fig. 7A.

Fig. 7C is a cross-sectional view taken along line Ce-Ce' of Fig. 7A.

Fig. 8A is a top view illustrating a configuration of a dielectric lens 2F of an antenna apparatus according to a fourth modified embodiment of the second embodiment.

Fig. 8B is a cross-sectional view taken along line Bf-Bf of Fig. 8A.

Fig. 8C is a cross-sectional view taken along line Cf-Cf of Fig. 8A.

Fig. 9A is a top view illustrating a configuration of a dielectric lens 2G of an antenna apparatus according to a fifth modified embodiment of the second embodiment.

Fig. 9B is a cross-sectional view taken along line Bg-Bg' of Fig. 9A.

Fig. 9C is a cross-sectional view taken along line Cg-Cg' of Fig. 9A.

Fig. 10 is a cross-sectional view illustrating a configuration of a dielectric lens 2H of an antenna apparatus according to a third embodiment.

Fig. 11 is a cross-sectional view illustrating a configuration of a dielectric lens 21 of an antenna apparatus according to a fourth embodiment.

Fig. 12 is a cross-sectional view illustrating a configuration of a dielectric lens 2J of an antenna apparatus according to a first modified embodiment of the fourth embodiment.

Fig. 13 is a cross-sectional view illustrating a configuration of a dielectric lens 2K of an antenna apparatus according to a second modified embodiment of the fourth embodiment.

Fig. 14 is a cross-sectional view illustrating a configuration of a dielectric lens 2L of an antenna apparatus according to a third modified embodiment of the fourth embodiment.

Fig. 15 is a cross-sectional view illustrating a configuration of a dielectric lens 2M of an antenna apparatus according to a fourth modified embodiment of the fourth embodiment.

Fig. 16 is a block diagram illustrating a configuration of a radar apparatus 100 according to a fifth embodiment.

Fig. 17 is a block diagram illustrating a configuration of a radar apparatus 200 according to a modified embodiment of the fifth embodiment.

DESCRIPTION OF EMBODIMENTS

FIRST EMBODIMENT

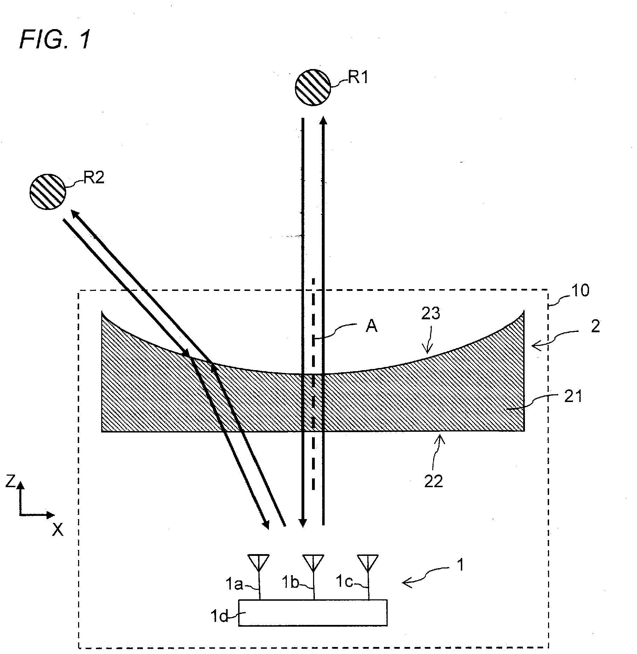

Fig. 1 is a diagram illustrating a configuration of an antenna apparatus 10 according to a first embodiment. The antenna apparatus 10 of Fig. 1 is provided with an antenna module 1 and a dielectric lens 2.

The antenna module 1 includes at least one antenna element 1a to 1c. In the example of Fig. 1, the antenna module 1 is an array antenna including three antenna elements 1a to 1c, and has a main beam in the +Z direction of Fig. 1. The antenna elements 1a to 1c are disposed, for example, on a substrate 1d.

The dielectric lens 2 includes a lens body 21 made of a dielectric material having a certain dielectric constant, and the lens body 21 has a first surface 22 and a second surface 23 opposing each other. The lens body 21 is formed so as to refract the incident wave on the antenna elements 1a to 1c or the incident wave from the antenna elements 1a to 1c, at refracting angles that gradually increase as the distance from the axis A passing through the centers of the first surface 22 and the second surface 23 increases.

The lens body 21 is made of, for example, a dielectric material having a relative dielectric constant of 2 to 5.

As illustrated in Fig. 1, the dielectric lens 2 is formed as a concave lens having a flat surface 22 and a concave surface 23. The concave surface 23 is formed so as to be more inclined as the distance from the axis A increases, and thus, the concave surface 23 refracts the incident wave at refractive angles that gradually increase as the distance from the axis A increases.

The dielectric lens 2 is disposed near the antenna module 1, so that radio waves emitted from the antenna elements 1a to 1c pass therethrough, or so that radio waves incident on the antenna elements 1a to 1c pass therethrough. When the antenna apparatus 10 is used in a radar apparatus, the dielectric lens 2 is disposed between the antenna module 1 and reflective objects R1 and R2.

We suppose a case where the antenna apparatus 10 is used in a radar apparatus. When the antenna module 1 has directivity, even if the antenna module 1 has a high gain in a direction, for example, in which the reflective object R1 is located, the antenna module 1 has a low gain in another direction, for example, in which the reflective object R2 is located. In this case, the power of the radio wave emitted to the reflective object R2 decreases, and the power of the radio wave received from the reflective object R2 also decreases. Therefore, the detection of the reflective object R2 may fails.

Since the antenna apparatus 10 of Fig. 1 is provided with the dielectric lens 2, it operates as follows. The radio wave emitted from the antenna module 1 in the direction near the +Z direction is refracted through the dielectric lens 2 to travel to the reflective object R2 located in the direction away from the +Z direction. In addition, the radio wave arriving from the reflective object R2 is refracted through the dielectric lens 2, so that the radio wave appears to arrive at the antenna module 1 from the direction near the +Z direction. The antenna module 1 has a high gain in the direction near the +Z direction. Therefore, since the antenna apparatus 10 of Fig. 1 is provided with the dielectric lens 2, the antenna apparatus 10 can transmit and receive, with high gain, not only the radio waves to and from the reflective object R1, but also the radio waves to and from the reflective object R2. Thus, when the antenna apparatus 10 is used in a radar apparatus, the radar apparatus can reliably detect the reflective object even when the reflective object is located in a direction away from a main beam direction of the antenna module 1.

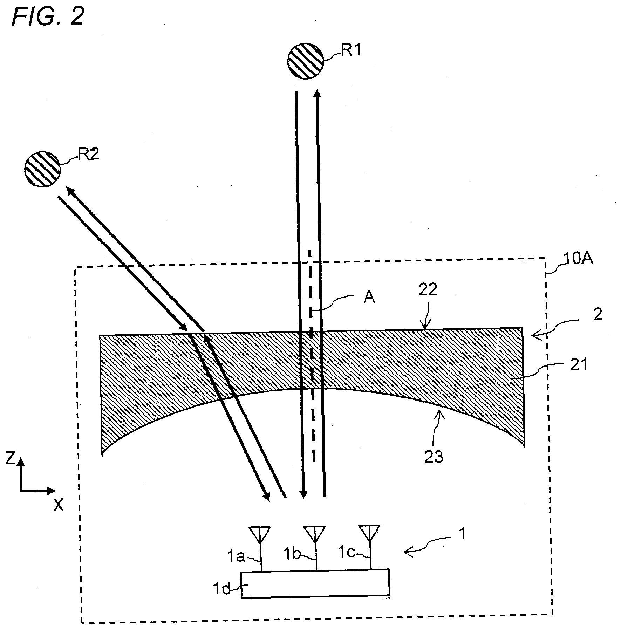

Fig. 2 is a diagram illustrating a configuration of an antenna apparatus 10A according to a modified embodiment of the first embodiment. When using the dielectric lens 2 formed as a concave lens having the flat surface 22 and the concave surface 23, the dielectric lens 2 may be arranged so that the flat surface 22 is opposed to the antenna module 1 as illustrated in Fig. 1, or the concave surface 23 is opposed to the antenna module 1 as illustrated in Fig. 2.

The antenna apparatus according to the first embodiment can provide a higher gain over a wider angular range than a case of using only the antenna module 1, with a simple configuration.

Since the antenna apparatus according to the first embodiment can provide a high gain over a wide angular range, without need for a plurality of transceivers, it is possible to reduce the cost of the wireless terminal apparatus. In addition, when the antenna apparatus is used in a radar apparatus, the radar apparatus can reliably detect a reflective object, without causing radio wave interference among the transceivers.

By reducing the distance between the antenna module and the dielectric lens, it is possible to reduce the size of the antenna apparatus.

By integrating the dielectric lens with a radome for protection, it is possible to reduce the cost of the antenna apparatus, or the cost of the wireless terminal apparatus provided with the antenna apparatus.

SECOND EMBODIMENT

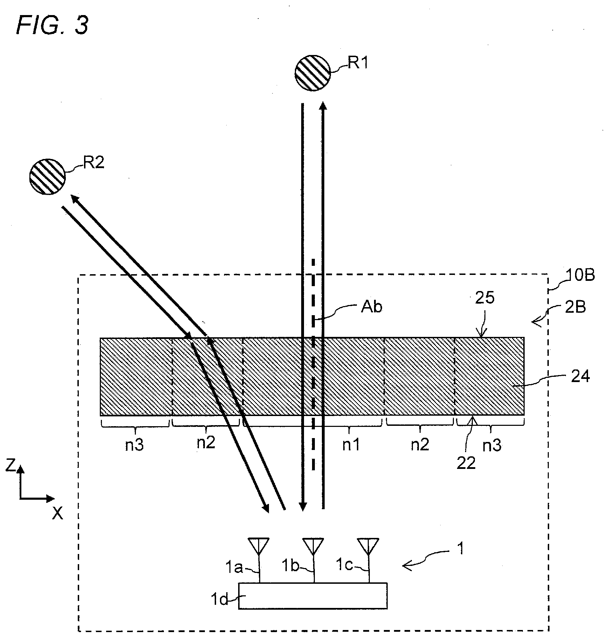

Fig. 3 is a diagram illustrating a configuration of an antenna apparatus 10B according to a second embodiment. The antenna apparatus 10B of Fig. 3 is provided with a dielectric lens 2B, instead of the dielectric lens 2 of Fig. 1. The dielectric lens 2 of Fig. 1 refracts the incident wave by the shape of the surface thereof (shape of the concave lens), whereas the dielectric lens 2B of Fig. 3 refracts the incident wave by changing the refractive index of the lens body according to the distance from the axis.

The dielectric lens 2B includes a lens body 24 made of a dielectric material having a certain dielectric constant, and the lens body 24 has a first surface 22 and a second surface 25 opposing each other. The surfaces 22 and 25 may be formed parallel to each other. The lens body 24 is formed so that the refractive index of the dielectric lens 2B decreases as approaching the axis Ab passing through the centers of the surfaces 22 and 25. In the example of Fig. 3, the dielectric lens 2B has a refractive index n1 in a region near the axis Ab, a refractive index n2 > n1 in a region outside thereof, and a refractive index n3 > n2 in a region further outside thereof. As a result, the lens body 24 is formed so as to refract the incident wave on the antenna elements 1a to 1c, or the incident wave from the antenna elements 1a to 1c, at refracting angles that gradually increase as the distance from the axis Ab increases. In other words, the dielectric lens 2B equivalently functions as a concave lens, while having a planar configuration.

The lens body 24 is made of, for example, a dielectric material having a relative dielectric constant of 2 to 5.

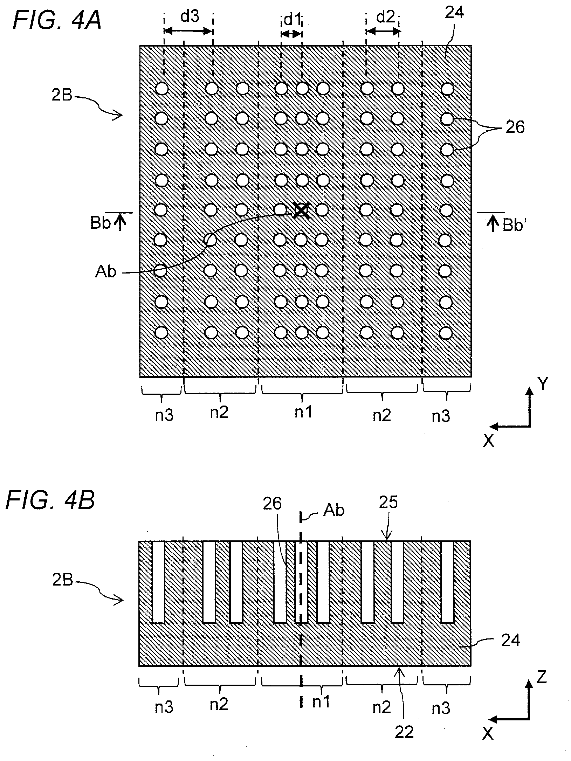

Fig. 4A is a top view illustrating a configuration of the dielectric lens 2B of Fig. 3. Fig. 4B is a cross-sectional view taken along line B2-B' of Fig. 4A. The lens body 24 has a plurality of holes 26 in the surface 22 or 25, with gradually increasing volumes of the dielectric material being removed as approaching the axis Ab, so that the refractive index of the dielectric lens 2B decreases as approaching the axis Ab. In the example of Fig. 4, the plurality of holes 26 have gradually decreasing intervals as approaching the axis Ab. Specifically, in the region near the axis Ab, the holes 26 are formed with an interval d1, so that the dielectric lens 2B has the refractive index n1 in this region. In the region outside thereof, the holes 26 are formed with an interval d2 > d1, so that the dielectric lens 2B has the refractive index n2 in this region. In the region further outside thereof, the holes 26 are formed with an interval d3 > d2, so that the dielectric lens 2B has the refractive index n3 in this region.

The diameter of the holes 26 is set, for example, between λ/50 and λ/2 with respect to an operating wavelength λ.

The refractive index n of a certain medium is expressed as follows.

[Mathematical Expression 1]

$$n = \sqrt{\varepsilon_r \cdot \mu_r}$$

Here, $\varepsilon_r$ denotes the relative permittivity of the medium, and $\mu_r$ denotes the relative permeability of the medium.

By forming one or more holes 26 in the lens body 24 to remove the dielectric material, the equivalent dielectric constant of the dielectric lens 2B near the hole 26 decreases, and thus, the equivalent refractive index of the dielectric lens 2B near the hole 26 also decreases. For example, as illustrated in Fig. 4, in the lens body 24, by forming the plurality of holes 26 having gradually decreasing intervals as approaching the axis Ab, gradually increasing volumes of the dielectric material are removed as approaching the axis Ab is removed. As a result, the refractive index of the dielectric lens 2B decreases as approaching the axis Ab, and the dielectric lens 2B equivalently functions as a concave lens.

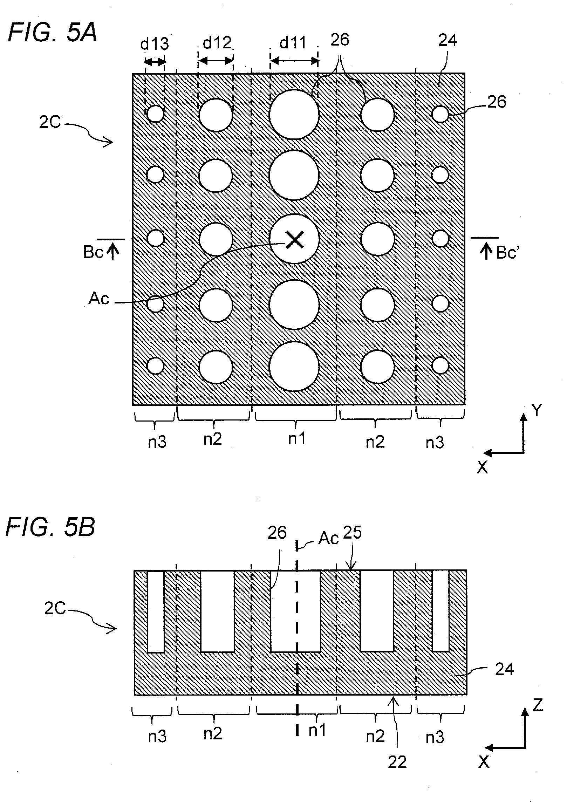

Fig. 5A is a top view illustrating a configuration of a dielectric lens 2C of an antenna apparatus according to a first modified embodiment of the second embodiment. Fig. 5B is a cross-sectional view taken along line Bc-Bc' of Fig. 5A. The dielectric lens 2C includes a lens body 24 made of a dielectric material having a certain dielectric constant, and the lens body 24 has a first surface 22 and a second surface 25 opposing each other, in a manner similarly to that of the dielectric lens 2B. The lens body 24 has a plurality of holes 26 in the surface 22 or 25, with gradually increasing volumes of the dielectric material being removed as approaching the axis Ac, so that the refractive index of the dielectric lens 2C decreases as approaching the axis Ac. In the example of Fig. 5, the plurality of holes 26 have gradually increasing diameters as approaching the axis Ac. Specifically, in a region near the axis Ac, the holes 26 are formed with a diameter d11, so that the dielectric lens 2C has the refractive index n1 in this region. In a region outside thereof, the holes 26 are formed with a diameter d12 < d11, so that the dielectric lens 2C has the refractive index n2 in this region. In a region further outside thereof, the holes 26 are formed with a diameter d13 < d12, so that the dielectric lens 2C has the refractive index n3 in this region. Thus, the lens body 24 is formed so as to refract the incident wave at refracting angles that gradually increase as the distance from the axis Ac increases.

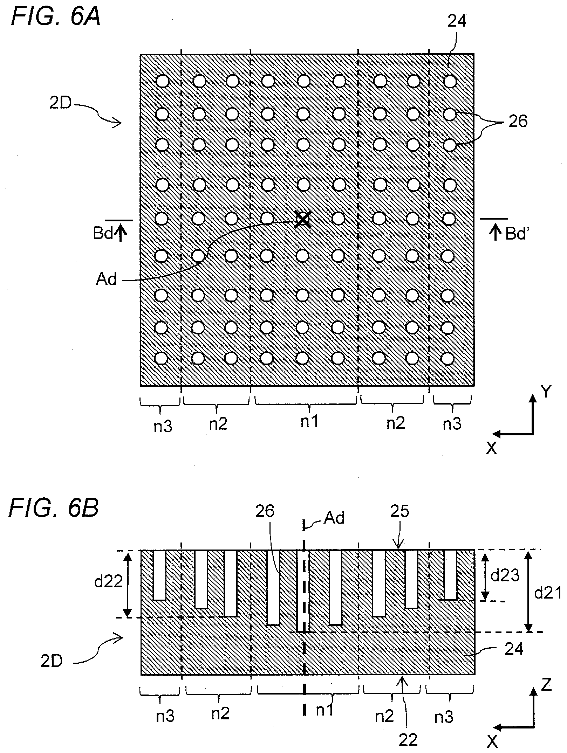

Fig. 6A is a top view illustrating a configuration of a dielectric lens 2D of an antenna apparatus according to a second modified embodiment of the second embodiment. Fig. 6B is a cross-sectional view taken along line Bd-Bd' of Fig. 6A. The dielectric lens 2D includes a lens body 24 made of a dielectric material having a certain dielectric constant, and the lens body 24 has a first surface 22 and a second surface 25 opposing each other, in a manner similarly to that of the dielectric lens 2B. The lens body 24 has a plurality of holes 26 in the surface 22 or 25, with gradually increasing volumes of the dielectric material being removed as approaching the axis Ad, so that the refractive index of the dielectric lens 2D decreases as approaching the axis Ad. In the example of Fig. 5, the plurality of holes 26 have gradually increasing depths as approaching the axis Ad. Specifically, in a region near the axis Ad, the holes 26 are formed with a depth d21, so that the dielectric lens 2D has the refractive index n1 in this region. In a region outside thereof, the holes 26 are formed with a depth d22 < d21, so that the dielectric lens 2D has the refractive index n2 in this region. In a region further outside thereof, the holes 26 are formed with a depth d23 < d22, so that the dielectric lens 2D has the refractive index n3 in this region. Thus, the lens body 24 is formed so as to refract the incident wave at refracting angles that gradually increase as the distance from the axis Ad increases.

Although the examples of Figs. 4A to 6B illustrate the cases where the plurality of holes 26 are formed in the surface 25, the plurality of holes 26 may be alternatively or additionally provided in the surface 22. In addition, at least a part of the plurality of holes 26 may penetrate the lens body 24.

Although the examples of Figs. 4A to 6B illustrate the cases where one of the interval, diameter, and depth of the holes 26 varies according to the distance from the axes Ab to Ad, the plurality of holes 26 may be formed so that two or more of the interval, diameter, and depth of the holes 26 vary according to the distance from the axes Ab to Ad.

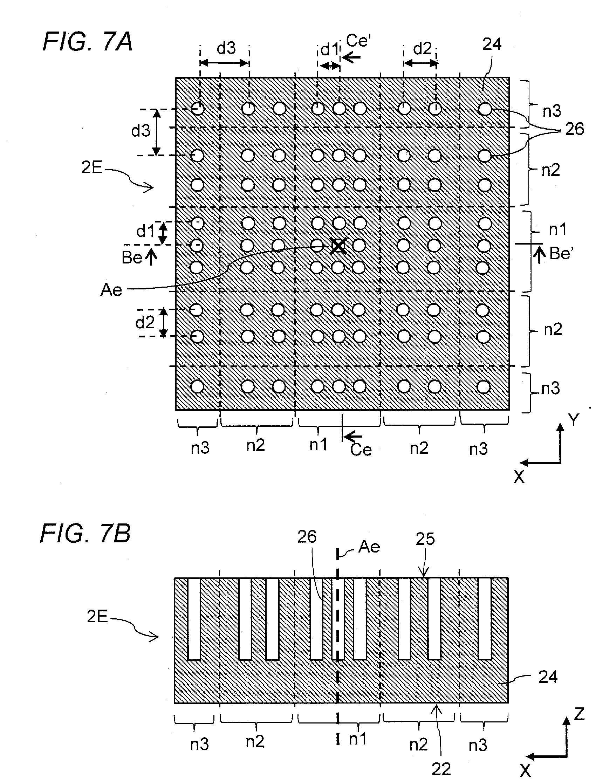

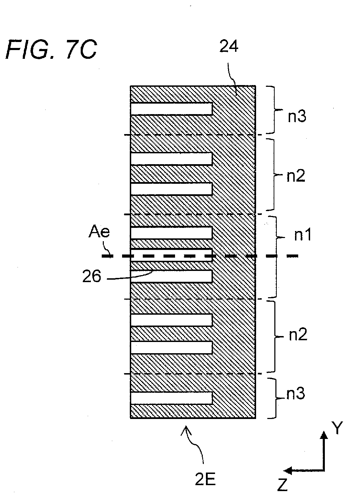

Although the examples of Figs. 4A to 6B illustrate the cases where the interval, diameter, or depth of the holes 26 varies according to the one-dimensional distance from the axes Ab to Ad, that is, according to the X coordinate. However, at least one of the interval, diameter, and depth may vary according to the two-dimensional distance from the axes Ab to Ad. Hereinafter, such modified embodiments will be described with reference to Figs. 7 to 9.

Fig. 7A is a top view illustrating a configuration of a dielectric lens 2E of an antenna apparatus according to a third modified embodiment of the second embodiment. Fig. 7B is a cross-sectional view taken along line Be-Be' of Fig. 7A. Fig. 7C is a cross-sectional view taken along line Ce-Ce' of Fig. 7A. In the example of Figs. 7A to 7C, the plurality of holes 26 have gradually decreasing intervals with respect to the X coordinate as approaching the axis Ae, and gradually decreasing intervals with respect to the Y coordinate as approaching the axis Ae.

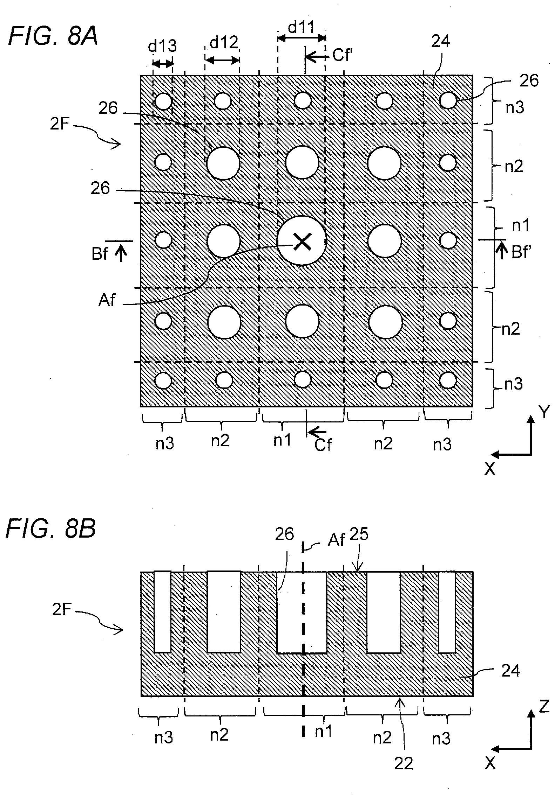

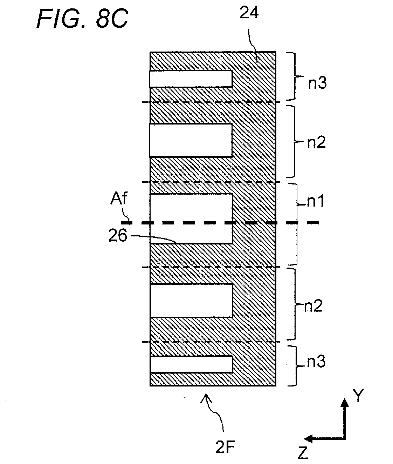

Fig. 8A is a top view illustrating a configuration of a dielectric lens 2F of an antenna apparatus according to a fourth modified embodiment of the second embodiment. Fig. 8B is a cross-sectional view taken along line Bf-Bf of Fig. 8A. Fig. 8C is a cross-sectional view taken along line Cf-Cf of Fig. 8A. In the example of Figs. 8A to 8C, the plurality of holes 26 have gradually increasing diameters with respect to the X coordinate as approaching the axis Af, and gradually increasing diameters with respect to the Y coordinate as approaching the axis Af.

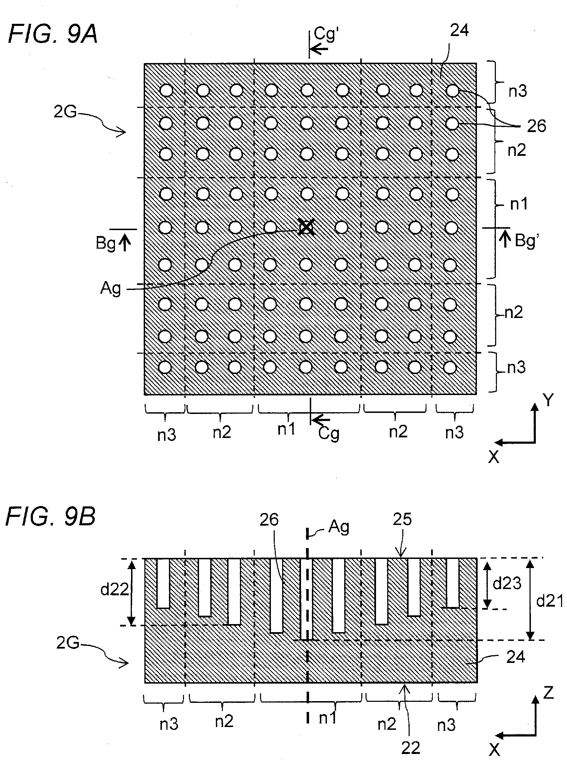

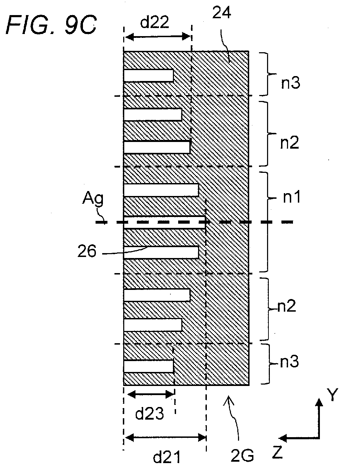

Fig. 9A is a top view illustrating a configuration of a dielectric lens 2G of an antenna apparatus according to a fifth modified embodiment of the second embodiment. Fig. 9B is a cross-sectional view taken along line Bg-Bg' of Fig. 9A. Fig. 9C is a cross-sectional view taken along line Cg-Cg' of Fig. 9A. In the example of Figs. 9 to 9C, the plurality of holes 26 have gradually increasing depths with respect to the X coordinate as approaching the axis Ag, and gradually increasing depths with respect to the Y coordinate as approaching the axis Ag.

According to the examples of Figs. 7A to 9C, the incident wave can be two-dimensionally refracted at refracting angles that gradually increase as the distance from the axes Ae to Ag increases.

Although the examples of Figs. 7A to 9C illustrate the cases where the plurality of holes 26 are arranged in a lattice, the plurality of holes 26 may be arranged radially around the axes Ae to Ag.

In the case of manufacturing the concave dielectric lens as illustrated in Fig. 1, since molding using an expensive mold per product type is required in order to obtain a smooth concave surface, the manufacturing cost increases. On the other hand, according to the antenna apparatus of the second embodiment, the dielectric lenses 2B to 2G can be easily manufactured at low cost by processing the planar lens body 24 through simple boring. Further, the dielectric lenses 2B to 2G may be manufactured by molding.

Although the examples of Figs. 3 to 9C illustrate the cases where the surfaces 22 and 25 of the lens body 24 are formed in parallel to each other, at least a part of one of the surfaces 22 and 25 may be inclined or curved with respect to the other surface. Regardless of the shape of the surfaces 22 and 25, the incident wave can be refracted by changing at least one of the interval, diameter, and depth of the holes 26 according to the distance from the axes Ab to Ag. For example, the first and second embodiments may be combined, that is, the lens body 24 formed as a concave lens may further has a plurality of holes 26 formed therein.

THIRD EMBODIMENT

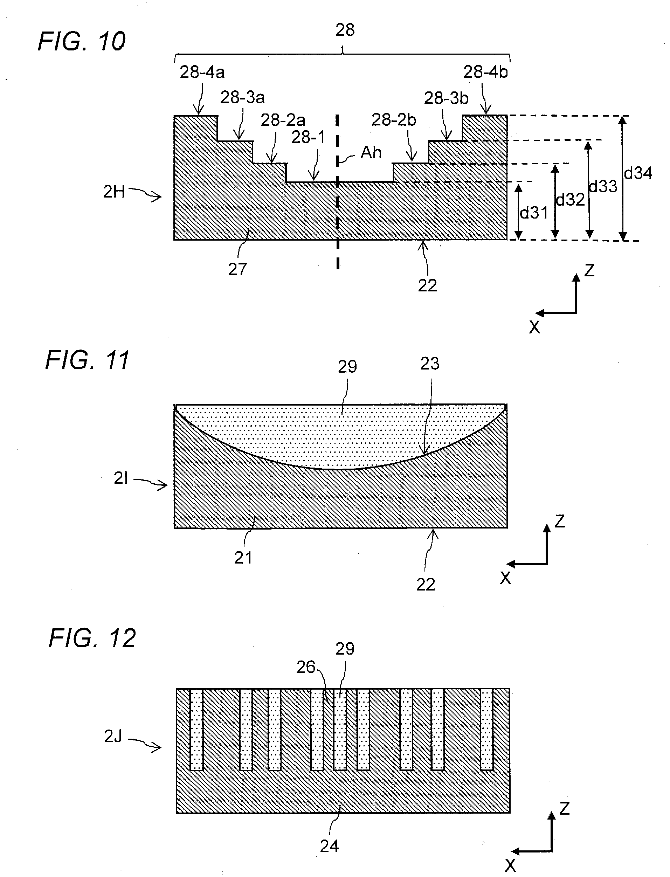

Fig. 10 is a cross-sectional view illustrating a configuration of a dielectric lens 2H of an antenna apparatus according to a third embodiment.

The dielectric lens 2H includes a lens body 27 made of a dielectric material having a certain dielectric constant, and the lens body 27 has a first surface 22 and a second surface 28 opposing each other. The surface 28 includes a plurality of regions 28-1, 28-2a, 28-2b, 28-3a, 28-3b, 28-4a, and 28-4b whose distances to the surface 22 decrease as approaching the axis Ah. The region 28-1 has a distance d31, the regions 28-2a and 28-2b have a distance d32 > d31, the regions 28-3a and 28-3b have a distance d33 > d32, and the regions 28-4a and 28-4b have a distance d34 > d33. The lens body 27 is formed so as to refract the incident wave at refracting angles that gradually increase as the distance from the axis Ah passing through the centers of the first and second surfaces increases.

The step width of the surface 28 is set to be shorter than the operating wavelength λ. In this case, the surface 28 equivalently functions as an inclined concave surface in a manner similar to that of the dielectric lens 2 of Fig. 1, and the dielectric lens 2H equivalently functions as a concave lens.

The configuration of Fig. 10 may be regarded as one in which adjacent holes 26 are connected to each other, in the dielectric lens 2D of Fig. 6 or the dielectric lens 2G of Fig. 9.

The plurality of regions of the surface 28 may be formed parallel to the surface 22. In this case, the dielectric lens 2H can be easily manufactured at low cost by cutting the planar lens body 27. Further, the dielectric lens 2H may be manufactured by molding.

In addition, at least a part of the plurality of regions of the surface 28 may be inclined or curved with respect to the surface 22. The second and third embodiments may be combined, that is, the lens body 27 of the dielectric lens 2H may further have a plurality of holes 26 formed therein..

FOURTH EMBODIMENT

Fig. 11 is a cross-sectional view illustrating a configuration of a dielectric lens 21 of an antenna apparatus according to a fourth embodiment. the dielectric lens 21 includes the lens body 21 of Fig. 1, and further includes a filler 29 made of a dielectric material having a dielectric constant smaller than the dielectric constant of the lens body 21, the filler 29 being filled in the concave surface 23. The surface of the filler 29 may be formed parallel to the flat surface 22.

The lens body 21 is made of, for example, a dielectric material having a relative dielectric constant of 2 to 5 as described above. In this case, the filler 29 is made of, for example, a dielectric material having a relative dielectric constant of 1.5 to 3.

The filler 29 may be injected to the concave surface 23 of the lens body 21. Further, the lens body 21 and the filler 29 may be bonded together with an adhesive. In the latter case, it is desired that the dielectric constant of the adhesive is set sufficiently close to the dielectric constant of the lens body 21 and the dielectric constant of the filler 29, or the thickness of the adhesive is sufficiently small with respect to the operating wavelength.

Fig. 12 is a cross-sectional view illustrating a configuration of a dielectric lens 2J of an antenna apparatus according to a first modified embodiment of the fourth embodiment. The dielectric lens 2J includes the lens body 24 of Figs. 4A and 4B or the lens body 24 of Figs. 7A to 7C, and further includes a filler 29 made of a dielectric material having a dielectric constant smaller than the dielectric constant of the lens body 24, the filler 29 being filled in a plurality of holes 26.

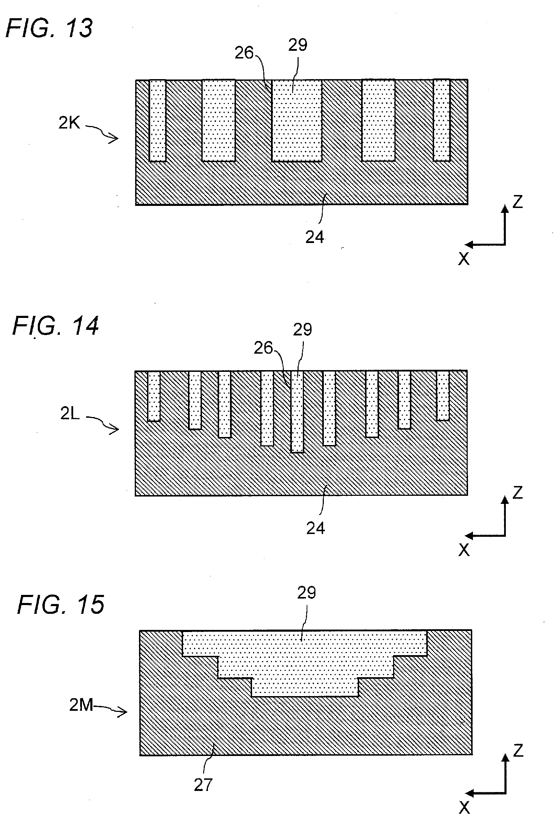

Fig. 13 is a cross-sectional view illustrating a configuration of a dielectric lens 2K of an antenna apparatus according to a second modified embodiment of the fourth embodiment. The dielectric lens 2K includes the lens body 24 of Figs. 5A and 5B or the lens body 24 of Figs. 8A to 8C, and further includes a filler 29 made of a dielectric material having a dielectric constant smaller than the dielectric constant of the lens body 24, the filler 29 being filled in a plurality of holes 26.

Fig. 14 is a cross-sectional view illustrating a configuration of a dielectric lens 2L of an antenna apparatus according to a third modified embodiment of the fourth embodiment. The dielectric lens 2L includes the lens body 24 of Figs. 6A and 6B or the lens body 24 of Figs. 9A to 9C, further includes a filler 29 made of a dielectric material having a dielectric constant smaller than the dielectric constant of the lens body 24, the filler 29 being filled in a plurality of holes 26.

Fig. 15 is a cross-sectional view illustrating a configuration of a dielectric lens 2M of an antenna apparatus according to a fourth modified embodiment of the fourth embodiment. The dielectric lens 2M includes the lens body 27 of Fig. 10, and further includes a filler 29 made of a dielectric material having a dielectric constant smaller than the dielectric constant of the lens body 27, the filler 29 being filled in a space above regions other than the regions 28-4a and 28-4b having the largest distance from the surface 22, among the plurality of regions of the surface 28.

For example, in the case of a concave lens, dust and dirt are likely to be adsorbed and accumulated in the concave portion. Therefore, in a case where the antenna apparatus provided with a concave dielectric is used in the radar apparatus, detection performance of the radar apparatus may deteriorate due to dust and dirt. On the other hand, according to the antenna apparatus of the fourth embodiment, since the concave portion or the holes are filled with the filler, dust and dirt are less likely to be adsorbed and accumulated. Even if dust and dirt are adsorbed to the dielectric lens, the dielectric lens can be easily wiped off. Therefore, when the antenna apparatus according to the fourth embodiment is used in the radar apparatus, the radar apparatus can reliably detect a reflective object.

In addition, in the case of the concave lens, since the peripheral portion is formed thin, the concave lens is mechanically fragile and likely to be damaged. Therefore, in a case where an antenna apparatus provided with a concave dielectric lens is used in the radar apparatus, detection performance of the radar apparatus may deteriorate due to damage. On the other hand, according to the antenna apparatus of the fourth embodiment, any portion of the dielectric lens is not thinner than the other portions thereof, and the dielectric lens has mechanically sufficient strength, and is less likely to be damaged. Therefore, when the antenna apparatus according to the fourth embodiment is used in the radar apparatus, the radar apparatus can reliably detect a reflective object.

According to the antenna apparatus of the fourth embodiment, it is possible to make it difficult for dust and dirt to be adsorbed to and accumulated in the dielectric lens, and to make it difficult for the dielectric lens to be damaged.

According to the antenna apparatus of the fourth embodiment, it is possible to form the surface of the filler 29 parallel to the flat surface 22, to obtain a planar dielectric lens without protrusions, recesses, or inclinations on the surface thereof.

FIFTH EMBODIMENT

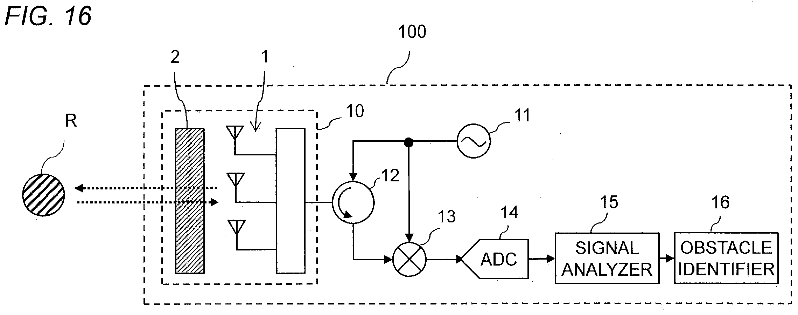

Fig. 16 is a block diagram illustrating a configuration of a radar apparatus 100 according to a fifth embodiment. The radar apparatus 100 is provided with an antenna apparatus 10, a signal generator 11, a circulator 12, a mixer 13, an analog/digital (AD) converter 14, a signal analyzer 15, and an obstacle identifier 16.

The antenna apparatus 10 is provided with an antenna module 1 and a dielectric lens 2. The antenna module 1 includes at least one antenna element operable as a transmitting antenna, and at least one antenna element operable as a receiving antenna. The antenna module 1 may be provided with at least one antenna element shared as a transmitting antenna and a receiving antenna, or may be provided with separate antenna elements, including at least one antenna element operable as a transmitting antenna, and at least one antenna element operable as a receiving antenna. The antenna module 1 may have variable directivity. The dielectric lens 2 may be configured in a manner similar to that of the dielectric lens 2 of Fig. 1, or may be configured in a manner similar to that of any one of the dielectric lenses 2A to 2M of other embodiments and modified embodiments.

The signal generator 11 generates a radio-frequency signal for detecting a reflective object R, sends the radio-frequency signal to the antenna apparatus 10 via the circulator 12, and sends the radio-frequency signal to the mixer 13. The signal generator 11 generates, for example, a chirp signal having a frequency gradually increasing or decreasing over time.

The antenna apparatus 10 emits the radio-frequency signal supplied from the signal generator 11, as a radar wave, to a space to be searched. The antenna apparatus 10 receives the radar wave reflected by the reflective object R, and sends the radar wave to the mixer 13 via the circulator 12.

The mixer 13 mixes the signals sent from the signal generator 11 and the antenna apparatus 10, and sends the mixed signal to the AD converter 14.

The AD converter 14 converts the analog signal sent from the mixer 13, into a digital signal, and sends the digital signal to the signal analyzer 15.

The signal generator 11, the circulator 12, the mixer 13, and the AD converter 14 are an example of a transmitting and receiving circuit that transmits and receives radar waves via the antenna apparatus 10.

The signal analyzer 15 determines the position of the reflective object R with reference to the position of the radar apparatus 100, based on the signal sent from the AD converter 14 (that is, the received signal corresponding to the received radar wave). The signal analyzer 15 converts a signal corresponding to the received radar wave, from a time domain to a frequency domain, for example, using a fast Fourier transform, and detects a signal level of the received radar wave in the frequency domain. The signal analyzer 15 detects the frequency of the received radar wave, and estimates the distance from the radar apparatus 100 to the reflective object R based on the difference between the frequency of the transmitted radar wave and the frequency of the received radar wave. In addition, when the antenna module 1 is provided with a plurality of receiving antennas, the signal analyzer 15 estimates the direction of arrival of the received radar wave, based on the plurality of received signals. The signal analyzer 15 determines the position of the reflective object R by estimating the distance and the direction of arrival.

The obstacle identifier 16 determines whether or not the reflective object R is an obstacle, and outputs a determination result to an external apparatus (not shown).

The signal analyzer 15 and the obstacle identifier 16 are an example of a signal processing circuit that detects the reflective object R based on the radar waves transmitted and received by the transmitting and receiving circuit.

Since the radar apparatus 100 of the fifth embodiment is provided with the dielectric lens 2, it is possible to provide a higher gain over a wider angular range than a case of using only the antenna module 1, with a simple configuration.

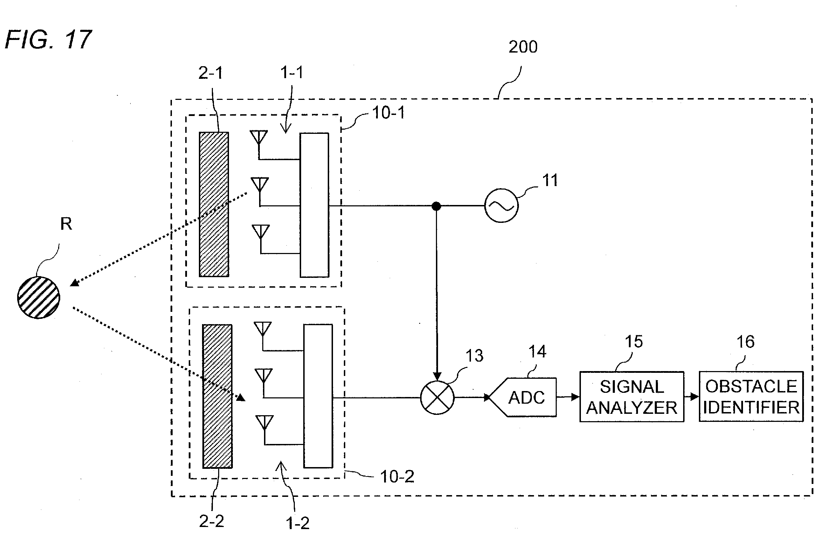

Fig. 17 is a block diagram illustrating a configuration of a radar apparatus 200 according to a modified embodiment of the fifth embodiment. The radar apparatus 200 is provided with two antenna apparatuses 10-1 and 10-2, instead of the one antenna apparatus 10 and the circulator 12 of the radar apparatus 100 of Fig. 16.

The antenna apparatus 10-1 is provided with an antenna module 1-1 and a dielectric lens 2-1. The antenna module 1-1 includes at least one antenna element operable as a transmitting antenna. The dielectric lens 2-1 may be configured in a manner similar to that of the dielectric lens 2 of Fig. 1, or may be configured in a manner similar to that of any one of the dielectric lenses 2A to 2M of other embodiments and modified embodiments.

The antenna apparatus 10-2 is provided with an antenna module 1-2 and a dielectric lens 2-2. The antenna module 1-2 includes at least one antenna element operable as a receiving antenna. The dielectric lens 2-2 may be configured in a manner similar to that of the dielectric lens 2 of Fig. 1, or may be configured in a manner similar to that of any one of the dielectric lenses 2A to 2M of other embodiments and modified embodiments.

The antenna apparatus 10-1 emits the radio-frequency signal supplied from the signal generator 11, as a radar wave, to a space to be searched. The antenna apparatus 10-2 receives the radar wave reflected by the reflective object R, and sends the radar wave to the mixer 13 via the circulator 12.

The other components of the radar apparatus 200 operate in a manner similar to that of the corresponding components of the radar apparatus 100 of Fig. 16.

At least one of the antenna modules 1-1 and 1-2 may have variable directivity. One of the antenna modules 1-1 and 1-2 may be omnidirectional, or may have a fixed main beam direction. Whether the antenna module has variable directivity or a fixed main beam direction, the dielectric lens can advantageously widen an available angular width of the antenna apparatus for communication.

When one of the antenna modules 1-1 and 1-2 is omnidirectional, the dielectric lens for this antenna module may be omitted. As described above, an antenna apparatus with a dielectric lens, and an antenna apparatus without a dielectric lens may be used in combination for transmitting and receiving radar waves.

Since the radar apparatus 200 according to the modified embodiment of the fifth embodiment is provided with the dielectric lenses 2-1 and 2-2, it is possible to provide a higher gain over a wider angular range than a case of using only the antenna modules 1-1 and 1-2, with a simple configuration.

SUMMARY OF EMBODIMENTS

The antenna apparatuses and the radar apparatuses according to the respective aspects of the present disclosure may be expressed as follows.

According to an aspect of the present disclosure, an antenna apparatus 10, 10A, 10B is provided with: at least one antenna element 1a to lc; and a dielectric lens 2, 2A to 2M including a lens body 21, 24, 27 made of a first dielectric material having a first dielectric constant, the lens body 21, 24, 27 having first and second surfaces opposing each other. The lens body 21, 24, 27 is formed so as to refract an incident wave on the antenna element 1a to 1c or an incident wave from the antenna element 1a to 1c, at refracting angles that gradually increase as a distance from an axis A, Ab to Ah passing through centers of the first and second surfaces increases.

According to an aspect of the present disclosure, the lens body 24 has a plurality of holes 26 in the first or second surface, with gradually increasing volumes of the first dielectric material being removed as approaching the axis Ab to Ah, so that a refractive index of the dielectric lens 2B to 2G, 2J to 2L decreases as approaching the axis Ab to Ah.

According to an aspect of the present disclosure, the plurality of holes 26 have gradually decreasing intervals as approaching the axis Ab, Ae.

According to an aspect of the present disclosure, the plurality of holes 26 have gradually increasing diameters as approaching the axis Ac, Af.

According to an aspect of the present disclosure, the plurality of holes 26 have gradually increasing depths as approaching the axis Ad, Ag.

According to an aspect of the present disclosure, the first and second surfaces are formed in parallel to each other.

According to an aspect of the present disclosure, the dielectric lens 2J to 2L further includes a filler 29 made of a second dielectric material having a second dielectric constant smaller than the first dielectric constant, the filler 29 being filled in the plurality of holes 26.

According to an aspect of the present disclosure, the first surface is a flat surface, and the second surface is a concave surface.

According to an aspect of the present disclosure, the dielectric lens 21 further includes a filler 29 made of a second dielectric material having a second dielectric constant smaller than the first dielectric constant, the filler 29 being filled in the second surface. A surface of the filler 29 is formed parallel to the first surface.

According to an aspect of the present disclosure, the second surface includes a plurality of regions whose distances to the first surface gradually decrease as approaching the axis Ah.

According to an aspect of the present disclosure, the plurality of regions of the second surface are formed parallel to the first surface.

According to an aspect of the present disclosure, the dielectric lens 2M further includes a filler 29 made of a second dielectric material having a second dielectric constant smaller than the first dielectric constant, the filler 29 being filled in a space above regions other than regions having a largest distance from the first surface, among the plurality of regions of the second surface.

According to an aspect of the present disclosure, a radar apparatus 100, 200 is provided with: at least one antenna apparatus 10, 10A, 10B; a transmitting and receiving circuit that transmits and receives radar waves via the antenna apparatus 10, 10A, 10B; and a signal processing circuit that detects a reflective object based on the radar waves transmitted and received by the transmitting and receiving circuit.

INDUSTRIAL APPLICABILITY

The antenna apparatus and the radar apparatus of the present disclosure can provide a higher gain over a wider angular range than the prior art, with a simple configuration, and reliably detect a reflective object.

REFERENCE SIGNS LIST

1: ANTENNA MODULE

1a to 1c: ANTENNA ELEMENT

1d: SUBSTRATE

2, 2A to 2M: DIELECTRIC LENS

10, 10A, 10B: ANTENNA APPARATUS

11: SIGNAL GENERATOR

12: CIRCULATOR

13: MIXER

14: ANALOG/DIGITAL (AD) CONVERTER

15: SIGNAL ANALYZER

16: OBSTACLE IDENTIFIER

21, 24, 27: LENS BODY

22: FIRST SURFACE

23, 25, 28: SECOND SURFACE

26: HOLE

29: FILLER

100, 200: RADAR APPARATUS

**Claims**

1. An antenna apparatus comprising:

   at least one antenna element; and
   a dielectric lens including a lens body made of a first dielectric material having a first dielectric constant, the lens body having first and second surfaces opposing each other,
   wherein the lens body is formed so as to refract an incident wave on the antenna element or an incident wave from the antenna element, at refracting angles that gradually increase as a distance from an axis passing through centers of the first and second surfaces increases.

2. The antenna apparatus as claimed in claim 1, wherein the lens body has a plurality of holes in the first or second surface, with gradually increasing volumes of the first dielectric material being removed as approaching the axis, so that a refractive index of the dielectric lens decreases as approaching the axis.

3. The antenna apparatus as claimed in claim 2, wherein the plurality of holes have gradually decreasing intervals as approaching the axis.

4. The antenna apparatus as claimed in claim 2, wherein the plurality of holes have gradually increasing diameters as approaching the axis.

5. The antenna apparatus as claimed in claim 2, wherein the plurality of holes have gradually increasing depths as approaching the axis.

6. The antenna apparatus as claimed in one of claims 2 to 5,
   wherein the first and second surfaces are formed in parallel to each other.

7. The antenna apparatus as claimed in one of claims 2 to 6,
   wherein the dielectric lens further includes a filler made of a second dielectric material having a second dielectric constant smaller than the first dielectric constant, the filler being filled in the plurality of holes.

8. The antenna apparatus as claimed in claim 1, wherein the first surface is a flat surface, and the second surface is a concave surface.

9. The antenna apparatus as claimed in claim 8,

   wherein the dielectric lens further includes a filler made of a second dielectric material having a second dielectric constant smaller than the first dielectric constant, the filler being filled in the second surface, and
   wherein a surface of the filler is formed parallel to the first surface.

10. The antenna apparatus as claimed in claim 1, wherein the second surface includes a plurality of regions whose distances to the first surface gradually decrease as approaching the axis.

11. The antenna apparatus as claimed in claim 10, wherein the plurality of regions of the second surface are formed parallel to the first surface.

12. The antenna apparatus as claimed in claim 10 or 11, wherein the dielectric lens further includes a filler made of a second dielectric material having a second dielectric constant smaller than the first dielectric constant, the filler being filled in a space above regions other than regions having a largest distance from the first surface, among the plurality of regions of the second surface.

13. A radar apparatus comprising:

at least one antenna apparatus as claimed in one of claims 1 to 12;
a transmitting and receiving circuit that transmits and receives radar waves via the antenna apparatus; and
a signal processing circuit that detects a reflective object based on the radar waves transmitted and received by the transmitting and receiving circuit.

FIG. 1

FIG. 2

FIG. 3

*FIG. 4A*

*FIG. 4B*

FIG. 5A

FIG. 5B

*FIG. 6A*

*FIG. 6B*

**FIG. 7A**

**FIG. 7B**

*FIG. 7C*

## FIG. 8A

## FIG. 8B

*FIG. 8C*

**FIG. 9A**

**FIG. 9B**

FIG. 9C

*FIG. 10*

*FIG. 11*

*FIG. 12*

*FIG. 13*

*FIG. 14*

*FIG. 15*

FIG. 16

FIG. 17

EP 4 120 478 A1

**INTERNATIONAL SEARCH REPORT**

| International application No. |
| --- |
| PCT/JP2021/001396 |

A. CLASSIFICATION OF SUBJECT MATTER
Int.Cl. H01Q15/08(2006.01)i, H01Q21/06(2006.01)i, G01S7/03(2006.01)i
FI: H01Q15/08, H01Q21/06, G01S7/03212

According to International Patent Classification (IPC) or to both national classification and IPC

B. FIELDS SEARCHED

Minimum documentation searched (classification system followed by classification symbols)
Int.Cl. H01Q15/08, H01Q21/06, G01S7/03

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2006-105866 A (MATSUSHITA ELECTRIC INDUSTRIAL CO., LTD.) 20 April 2006 (2006-04-20), paragraphs [0027]-[0040], [0047]-[0049], fig. 2, 6 | 1, 8, 10, 11, 13 |
| Y | | 2-7, 9, 12 |
| Y | JP 2002-171119 A (KYOCERA CORPORATION) 14 June 2002 (2002-06-14), paragraphs [0017]-[0025], fig. 1, 2, 5 | 2-7, 9, 12 |

☐ Further documents are listed in the continuation of Box C.　　☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 05 April 2021 | 13 April 2021 |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

| INTERNATIONAL SEARCH REPORT | International application No. |
|---|---|
| Information on patent family members | PCT/JP2021/001396 |

```
JP 2006-105866 A   20 April 2006      (Family: none)

JP 2002-171119 A   14 June 2002       (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3418769 A1